# EUROPÄISCHE PATENTANMELDUNG

(11) **EP 1 319 526 A2**
(43) Veröffentlichungstag der Anmeldung: **18.06.2003**
(21) Anmeldenummer: 02021130.6
(22) Anmeldetag: 23.09.2002
(51) Int. Cl.: B60B 7/18, B60B 7/00, B60B 3/10, B60B 19/10

(54) **Fahrzeugrad oder Felge**

(30) Priorität: 14.12.2001 DE 10161868; 14.12.2001 DE 10161869
(71) Anmelder: Bayerische Motoren Werke Aktiengesellschaft, 80809 München (DE)
(72) Erfinder: Winkelmann, Holger, 85301 Schweitenkirchen (DE); Prys, Gerhard, 82110 Germering (DE)

(57) **Zusammenfassung**

Die Erfindung betrifft ein Fahrzeugrad oder eine Felge (1) mit einem Nabenabschnitt (1a), einem Felgenbett (1b) zur Aufnahme eines Reifens (7) sowie mit mehreren zwischen dem Nabenabschnitt und dem Felgenbett über dem Umfang verteilt angeordneten Stegen (1c), zwischen denen Durchbrüche (1d) vorgesehen sind. Erfindungsgemäß ist zumindest einer der Durchbrüche (1d) zumindest teilweise abdeckbar oder verschließbar ist, während sich das mit diesem Fahrzeugrad oder dieser Felge (1) ausgerüstete Fahrzeug bewegt, oder es ist zumindest einer der zunächst zumindest teilweise abgedeckten oder verschlossenen Durchbrüche (1d) zumindest teilweise freilegbar, während sich das mit diesem Fahrzeugrad oder dieser Felge (1) ausgerüstete Fahrzeug bewegt. Dabei kann ein Abdeckelement (3) der Durchbrüche (1d) mittels eines Aktuators gezielt in eine jeweils gewünschte Position bewegt werden, wobei der Aktuator kann die hierzu erforderliche Energie aus der Rotationsenergie des Rades oder aus dem bei der Fahrt des Fahrzeugs auftretenden Fahrtwind beziehen kann. Das selbsttätige Freilegen der Durchbrüche (1d) kann aber auch durch eine Temperaturänderung bspw. unter Nutzung einer Memory-Legierung erfolgen. Angegeben sind verschieden Ausführungsformen von Abdeckelementen, die bspw. um eine Klappachse (6) verschwenkbar sein können.

## Beschreibung

Die Erfindung betrifft ein Fahrzeugrad oder eine Felge mit einem Nabenabschnitt, einem Felgenbett zur Aufnahme eines Reifens oder zur Ausbildung einer Lauffläche, sowie mit mehreren zwischen dem Nabenabschnitt und dem Felgenbett über dem Umfang verteilt angeordneten Tragelementen wie Speichen oder Stegen, zwischen denen Durchbrüche oder Zwischenräume vorgesehen sind. Hierbei handelt es sich also um ein Rad von zunächst allgemein üblichem Aufbau, wie es bspw. an Kraftfahrzeugen, insbesondere Personenkraftwagen, aber auch an Krafträdern, also Einspurfahrzeugen, daneben aber auch an Fahrrädern oder sonstigen Fahrzeugen zum Einsatz kommen kann. Dabei sind Fahrzeugräder nach dem Oberbegriff des Anspruchs 1 in den verschiedensten Ausführungsformen allgemein bekannt.

Für den Einsatz an Kraftfahrzeugen sind die genannten Durchbrüche oder Zwischenräume zwischen den sog. Stegen (bspw. an Leichtmetallrädern in den unterschiedlichsten Gestaltungen weit verbreitet) nicht nur im Hinblick auf ein ansprechendes Styling vorgesehen, sondern dienen auch dazu, den Radbremsen, die üblicherweise in der sog. Felgenschüssel angeordnet sind, einen ausreichenden Kühlluftstrom zukommen zu lassen. Sog. Speichenräder hingegen kommen insbesondere im Hinblick auf eine größtmögliche Gewichtsreduzierung zum Einsatz.

Andererseits haben Räder oder Felgen mit derartigen Durchbrüchen oder Zwischenräumen zwischen Stegen oder Speichen auch Nachteile, und zwar bezogen auf das gesamte Fahrzeug unter strömungsdynamischen Gesichtspunkten. So weisen diese Felgen nicht nur einen relativ hohen Öffnungsgrad auf, sondern besitzen auch eine Vielzahl von Kanten, Sicken und Rücksprüngen und sind insofern deutlich weniger glattflächig als sog. Radblenden oder Radkappen, die zumeist an Stahlfelgen verbaut werden. Unter aerodynamischen Aspekten wäre ein glattflächiges Scheibenrad ohne jegliche Öffnungen optimal; aus funktionalen, aber auch aus optischen Gründen sind jedoch insbesondere an Leichtmetallrädern die genannten Durchbrüche oder Zwischenräume vorhanden, die wie soeben erläutert nicht nur den Luftwiderstandsbeiwert des Fahrzeugs, sondern auch andere aerodynamische Kenngrößen des Fahrzeugs in ungünstiger Weise beeinflussen. Bei Krafträdern schließlich können diese Durchbrüche oder dgl. im Bereich zwischen dem Felgenbett und dem Nabenabschnitt des Rades die gewünschte Anströmung anderer Bauteile, wie bspw. eines Öl- oder Wasserkühlers in ungünstiger Weise beeinflussen.

Hiermit soll nun aufgezeigt werden, wie ein Fahrzeugrad nach dem Oberbegriff des Anspruchs 1 den soeben geschilderten, gegensätzlichen Anforderungen gerecht werden kann (= Aufgabe der vorliegenden Erfindung.
Die Lösung dieser Aufgabe ist dadurch gekennzeichnet, dass zumindest einer der Durchbrüche oder Zwischenräume zumindest teilweise abdeckbar oder verschließbar ist, während sich das mit diesem Fahrzeugrad oder dieser Felge ausgerüstete Fahrzeug bewegt, oder dass zumindest einer der zunächst zumindest teilweise abgedeckten oder verschlossenen Durchbrüche oder Zwischenräume zumindest teilweise freilegbar ist, während sich das mit diesem Fahrzeugrad oder dieser Felge ausgerüstete Fahrzeug bewegt. Vorteilhafte Aus- und Weiterbildungen sind Inhalt der Unteransprüche.

Eine erfindungsgemäße Felge bzw. ein entsprechendes Fahrzeugrad kann als (aerodynamisch) "aktiv" bezeichnet werden, da es möglich ist, die Gestalt dieser Felge den jeweiligen unterschiedlichen Anforderungen entsprechend anzupassen, und zwar sowohl im Hinblick auf strömungsdynamische Gesichtspunkte als auch auf weitere Gesichtspunkte, insbesondere hinsichtlich der Kühlung von im Rad angeordneten Elementen, insbesondere der Bremse, aber auch hinsichtlich Styling-Gesichtspunkten. Dies ist dabei erfindungsgemäß während der Fahrt des mit dieser "aktiven" Felge ausgerüsteten Fahrzeugs möglich, d.h. während sich das Fahrzeug-Rad bewegt.

So ist es möglich, die genannten Durchbrüche oder Zwischenräume im Bereich der sog. Felgenschüssel oder dgl. bei höheren Fzg.-Fahrgeschwindigkeiten zu verschließen oder abzudecken, so dass dann eine aerodynamisch äußerst günstige Felge vorliegt, die nahezu ebenso gut ist wie ein glattflächiges Scheibenrad. Bei niedrigeren Fahrgeschwindigkeiten hingegen, bei denen auch eine ausreichende Bremsenkühlung erforderlich ist, können diese Durchbrüche oder Zwischenräume wieder geöffnet werden und somit einen optimalen Kühlluftdurchtritt freigeben. Geöffnet oder freigelegt bleiben können diese besagten Durchbrüche oder Zwischenräume bei Fzg.-Stillstand, so dass sich dann ein optisch gefälliges Fzg.-Rad darstellt.

Alternativ hierzu kann ein erfindungsgemäßes Fzg.-Rad aber auch derart gestaltet sein, dass die Durchbrüche oder Zwischenräume üblicherweise (und somit bspw. auch bei Fahrzeugstillstand) verschlossen sind und nur dann zumindest teilweise freigelegt werden, wenn Umgebungsluft insbesondere zu Kühlzwecken durch diese Durchbrüche hindurchtreten soll, um bspw. ein in der Felgenschüssel angeordnetes Bremsenelement zu kühlen. Dabei kann dieses Freilegen der Durchbrüche durch die Temperatur am zu kühlenden Element oder allgemein innerhalb der Felgenschüssel gesteuert erfolgen.

Grundsätzlich kann ein irgendwie geeignet gestaltetes sog. Abdeckelement bzw. mehrere derartiger Abdeckelemente vorgesehen sein, mit Hilfe dessen bzw. derer die Durchbrüche oder Zwischenräume eines erfindungsgemäßen Fahrzeugrads bzw. einer Felge abgedeckt oder verschlossen bzw. geöffnet oder freigelegt werden können. Dabei kann das Abdeckelement mittels eines irgendwie geeignet gestalteten Aktuators gezielt in eine jeweils gewünschte Position bewegt werden.

Grundsätzlich benötigt ein derartiger Aktuator nicht nur ein Steuersignal, aufgrund dessen er das Abdeckelement bewegt oder verschiebt, sondern es wird für die Verschiebebewegung o.ä. auch eine bestimmte Energiemenge benötigt. Grundsätzlich kann ein derartiger Aktuator von außen mit geeigneter Hilfsenergie (bspw. mit elektrischer Energie über Schleifringe oder dgl.) versorgt werden, besonders vorteilhaft ist es jedoch, wenn keine externe Energiezufuhr benötigt wird. Dann kann der Aktuator die zum Freilegen (oder auch zum Schließen) des Durchbruchs oder der Durchbrüche erforderliche Energie aus der Rotationsenergie des Rades beziehen, alternativ aber auch aus dem bei der Fahrt des Fahrzeugs auftretenden Fahrtwind, oder es kann der Aktuator durch eine Temperaturänderung aktiviert werden.

Wenn bspw. die zum Abdecken oder Verschließen der Durchbrüche oder Zwischenräume benötigte Kraft aus der aus der Drehbewegung des Rades resultierenden Zentrifugalkraft abgeleitet wird, so ist also zum einen keine separate Energiequelle erforderlich, was nicht nur unter Wirkungsgrad-Gesichtspunkten, sondern insbesondere hinsichtlich der dann nicht erforderlichen Energieübertragung von außen in das Rad hinein besonders günstig ist. Darüber hinaus kann unter Zuhilfenahme der Zentrifugalkraft ein in Abhängigkeit von der Fzg.-Fahrgeschwindigkeit selbsttätiges Abdecken bzw. Öffnen der besagten Zwischenräume oder Durchbrüche einfach gesteuert werden. Indem nämlich die zum Abdecken oder Verschließen der Durchbrüche oder dgl. benötigte Energie der Radrotation über die auftretenden Zentrifugalkräfte entnommen wird, kann auch die Abstimmung bezüglich derjenigen Fzg.-Fahrgeschwindigkeit, bei sich die Felge selbsttätig "verschließt", ohne jeglichen weiteren Impuls von außen erfolgen, d.h. sobald das Fahrzeug eine (der einmaligen Auslegung entsprechende) Geschwindigkeit erreicht hat, werden die Durchbrüche unter Einwirkung der dann herrschenden Zentrifugalkräfte automatisch verschlossen bzw. abgedeckt. Gleiches gilt im übrigen, wenn die Kraft bzw. Energie, die der Aktuator benötigt, anders als über die Zentrifugalkraft aus der Rotationsenergie des Rades oder aus dem bei der Fahrt des Fahrzeugs auftretenden Fahrtwind bezogen wird.

Insbesondere für die im vorangegangenen Absatz erläuterten Fälle ist nicht nur dafür Sorge zu tragen, dass das oder die Abdeckelement(e) in seine/ihre die genannten Durchbrüche oder dgl. abdeckende Position bewegt wird bzw. werden, vielmehr muss auch eine entgegengerichtete Positionierung sichergestellt sein, nämlich die Rückführung in eine sog. Ausgangsposition bei niedrigeren Fahrgeschwindigkeiten oder bei Stillstand des Fahrzeugs. Besonders einfach und daher vorteilhaft ist es hierfür, wenn das oder die Abdeckelement(e) unter Einwirkung eines Federelementes, allg. eines Kraftspeicherelementes, in die Ausgangsposition bewegt oder gehalten wird bzw. werden. An geeigneter Stelle kann somit eine Rückholfeder oder dgl. angreifen, die das Abdeckelement bei nur geringen oder überhaupt nicht vorliegenden, letztlich aus der Fortbewegung des Fahrzeugs resultierenden Kräften in die Ausgangsposition bewegt. Dabei sei ausdrücklich darauf hingewiesen, dass es sich bei dieser Ausgangsposition nicht zwangsläufig um diejenige Position handeln muss, in der die besagten Durchbrüche oder Zwischenräume freigelegt sind, wenngleich dies durchaus ein bevorzugter Anwendungsfall sein kann. Vielmehr sind auch Anwendungsfälle möglich, in denen in der Ausgangsposition die Durchbrüche abgedeckt sind und diese bspw. zu Kühlzwecken freigelegt werden.

Insbesondere für den letztgenannten Anwendungsfall ist es vorteilhaft, wenn das zunächst den Durchbruch oder die Durchbrüche zumindest teilweise abdeckende Abdeckelement bei Überschreiten einer gewissen Temperatur im Radbereich selbsttätig in die den Durchbruch oder die Durchbrüche zumindest teilweise freilegende Position bewegt wird. Hierfür kann der Aktuator zur gewünschten Bewegung des Abdeckelementes bspw. auf Basis einer Memory-Legierung oder dgl. arbeiten. Möglich ist auch die Nutzung des Thermobimetalleffektes oder ähnlicher Phänomene zur Umsetzung der gewünschten erfindungsgemäßen Funktion.

Es ist jedoch auch möglich, ein erfindungsgemäßes Fahrzeugrad (oder eine Felge) ohne einen eigenständigen Aktuator zu gestalten, insbesondere wenn die zum Abdecken oder Verschließen der Durchbrüche oder Zwischenräume benötigte Kraft aus der aus der Drehbewegung des Rades resultierenden Zentrifugalkraft abgeleitet wird. Dann können nämlich die genannten Durchbrüche oder Zwischenräume im Bereich der sog. Felgenschüssel, d.h. zwischen dem Nabenabschnitt und dem Felgenbett, selbsttätig oberhalb einer gewissen Fahrgeschwindigkeit des Fahrzeugs oder Drehzahl des Rades zumindest teilweise abgedeckt oder verschlossen und unterhalb dieser Fahrgeschwindigkeit oder Drehzahl wieder selbsttätig freigelegt bzw. geöffnet werden. Der Fahrer des Fahrzeugs muss sich folglich hierum nicht kümmern; vielmehr sorgt das System in Form eines erfindungsgemäßen Fahrzeugrades selbsttätig dafür, dass abhängig von der Fzg.-Fahrgeschwindigkeit der jeweils günstigste bzw. vorteilhafteste Systemzustand vorliegt.

Der wesentliche Vorteil besteht dann darin, dass ein Schließen der Zwischenräume bzw. ein Abdecken der Durchbrüche erst bei relativ hohen Fzg.-Fahrgeschwindigkeiten stattfinden kann, so bspw. bei Werten größer als 120 km/h. Etwa ab dieser genannten Fahrgeschwindigkeit tragen die aerodynamischen Kräfte am Fahrzeug wesentlich zum Gesamtwiderstand des Fahrzeuges bei. Unterhalb dieser beispielhaft genannten Geschwindigkeit soll sich die "aktive" Felge bevorzugt selbständig wieder öffnen, d.h. die Durchbrüche zwischen den Stegen oder dgl. der Felge sollen automatisch wieder freigelegt werden.

An dieser Stelle sei ausdrücklich darauf hingewiesen, dass - wenn gleich hier öfter von einer "aktiven" Felge als erfindungsgemäßem Fahrzeugrad gesprochen wird - eine entsprechende Mechanik oder dgl. zur Umsetzung der gewünschten Funktion an einem erfindungsgemäßen Fahrzeugrad keineswegs Bestandteil der Felge selbst sein muss. Vielmehr kann/können ein bzw. mehrere bewegliche Abdeckelemente, das/die zum Abdecken oder Verschließen der Durchbrüche oder Zwischenräume vorgesehen ist/sind, auch Bestandteil einer auf die Felge aufsetzbaren Radkappe oder allg. Scheibe oder dgl. sein.

Wenn - wie weiter vorgeschlagen wird - die zum Abdecken oder Verschließen der Durchbrüche oder Zwischenräume benötigte Kraft aus der aus der Drehbewegung des Rades resultierenden Zentrifugalkraft abgeleitet wird, so ist zum einen keine separate Energiequelle erforderlich, was nicht nur unter Wirkungsgrad-Gesichtspunkten, sondern insbesondere hinsichtlich der dann nicht erforderlichen Energieübertragung von außen in das Rad hinein besonders günstig ist. Darüber hinaus kann unter Zuhilfenahme der Zentrifugalkraft auch das weiter oben beschriebene selbsttätige Abdecken bzw. Öffnen der besagten Zwischenräume oder Durchbrüche einfach gesteuert werden. Indem nämlich die zum Abdecken oder Verschließen der Durchbrüche oder dgl. benötigte Energie der Radrotation über die auftretenden Zentrifugalkräfte entnommen wird, kann auch die Abstimmung bezüglich derjenigen Fzg.-Fahrgeschwindigkeit, bei sich die Felge selbsttätig "verschließt", ohne jeglichen weiteren Impuls von außen erfolgen, d.h. sobald das Fahrzeug eine der einmaligen Auslegung entsprechende Geschwindigkeit erreicht hat, werden die Durchbrüche unter Einwirkung der dann herrschenden Zentrifugalkräfte automatisch verschlossen bzw. abgedeckt.

Realisiert werden kann eine entsprechende Mechanik zum automatischen Abdecken der genannten Zwischenräume oder dgl. unter Wirkung der Zentrifugalkraft über verschiedene Konzepte. So kann zumindest ein Massenelement geeignet geführt unter Zentrifugalkrafteinfluss in Radialrichtung nach außen bewegbar sein und hierbei zumindest ein Abdeckelement in eine zumindest einen Durchbruch oder Zwischenraum abdeckende oder verschließende Position überführen. Im Hinblick auf eine Gleichverteilung und um keine extreme Unwucht zu erzeugen werden jedoch mehrere derartige sog. Massenelemente vorzusehen sein, ebenso wie auch mehrere Abdeckelemente oder dgl. für die mehreren sog. Durchbrüche vorgesehen sein können. Dabei können die Massenelemente mit den zugeordneten Abdeckelementen über ein oder mehrere insbesondere flexible(s) Zugmittel verbunden sein. Alternativ hierzu oder auch ergänzend können dabei geeignete Kulissenführungen vorgesehen sein.

Es ist jedoch nicht nur dafür Sorge zu tragen, dass das oder die Abdeckelement(e) in seine/ihre die genannten Durchbrüche oder dgl. zumindest teilweise oder vollständig abdeckende Position bewegt wird bzw. werden, vielmehr muss auch eine entgegengerichtete Positionierung sichergestellt sein, nämlich die Überführung in die sog. Ruheposition bei niedrigeren Fahrgeschwindigkeiten oder bei Stillstand des Fahrzeugs, in der dann die genanten Durchbrüche wieder freigelegt oder geöffnet sind bzw. werden. Besonders einfach und daher vorteilhaft ist es hierfür, wenn das Massenelement und/oder das Abdeckelement unter Einwirkung eines Federelementes, allg. eines Kraftspeicherelementes, gegen Zentrifugalkrafteinfluss in die zumindest bei Radstillstand gewünschte sog. Ruheposition bewegt oder gehalten wird bzw. werden. An geeigneter Stelle kann somit eine Rückholfeder oder dgl. angreifen, die das oder die Abdeckelemente bei nur geringen oder überhaupt nicht vorliegenden Zentrifugalkräften in eine die Durchbrüche freilegende Position bewegt bzw. in einer solchen Position hält.

In diesem Zusammenhang sei ausdrücklich darauf hingewiesen, dass das oder die genannte(n) Federelement(e) oder dgl. auch dann vorgesehen sein kann/können und somit die gleiche Funktion auch dann ausüben kann/können, wenn die Abdeckelemente anders als durch Zentrifugalkrafteinwirkung in ihre die Durchbrüche abdeckende Position bewegt werden. Im übrigen können die Federelemente bzw. Kraftspeicherelemente - ebenso wie dies bereits für die genannten Massenelemente vorgeschlagen wurde - über insbesondere flexible Zugmittel mit den Abdeckelementen und/oder den Massenelementen verbunden sein, um wie gewünscht auf diese genannten Elemente einwirken zu können.

Nach einer besonders vorteilhaften Ausführungsform der Erfindung ist das Kraftspeicherelement in Form eines flexiblen Stabes ausgebildet, der einerseits im Nabenabschnitt des Fzg.-Rades befestigt ist und dessen anderes Ende unter Zentrifugalkrafteinfluss zum Felgenbett hin bewegbar ist. Auf diesem flexiblen Stab kann zumindest ein Massenelement angeordnet sein, das unter Zentrifugalkrafteinfluss bewirkt, dass das nicht am Nabenabschnitt befestigte Ende des flexiblen Stabes entgegen seiner Vorspannung zum Felgenbett hin bewegt wird. Wenn nun an diesem Stab, der so vorgespannt ist, dass in seiner sog. Ruheposition ohne Zentrifugalkrafteinfluss sein beweglicher Abschnitt im Nabenabschnitt des Fahrzeugrades liegt, zumindest ein geeignet gestaltetes Abdeckelement direkt oder indirekt (d.h. über ein Zugmittel oder dgl.) befestigt ist, so kann dieses Abdeckelement bei höheren Rad-Drehzahlen, d.h. unter Zentrifugalkrafteinfluss bei geeigneter Gestaltung in eine die besagten Durchbrüche in der Felgenschüssel abdeckende Position überführt werden. Ohne ausreichende Zentrifugalkraft wird dann der Stab aufgrund seiner Vorspannung wieder in seine Ruheposition zurückbewegt, wobei er das oder die Abdeckelement(e) in seine/ihre die Durchbrüche öffnende Position überführt.

Was die Gestaltung der Abdeckelemente betrifft, so bestehen vielfältige Möglichkeiten. So kann bspw. bevorzugt für die soeben erläuterte Ausführungsform des Kraftspeicherelementes als flexibler, geeignet vorgespannter Stab das Abdeckelement in Form mehrerer bspw. sichelförmiger und um einen gemeinsamen felgenfesten Punkt verschwenkbarer Lamellen ausgebildet sein. Diese nicht an der Felge befestigten Endabschnitte der Lamellen können dann an einem geeigneten Mitnahmeelement (bspw. am genannten Stab) befestigt sein, welches diese Lamellen in der jeweils gewünschten Weise mitnimmt bzw. verschwenkt. Vergleichbar einer Foto-Irisblende können dann diese genanten Lamellen den jeweils zugehörigen Durchbruch verschließen bzw. offen legen.

In einer anderen Ausführungsform kann das Abdeckelement als eine um die Radachse verdrehbare Scheibe ausgebildet sein. Diese Scheibe ist mit den Durchbrüchen in der Felge oder den besagten Zwischenräumen zwischen den Speichen oder Stegen angepassten Öffnungen oder Durchbrüchen versehen, so dass in einer ersten Position dieser verdrehbaren Scheibe die Durchbrüche in der Felge freigelegt sind und in einer zweiten, gegenüber ersten verdrehten Position verschlossen oder abgedeckt sind.

Um bspw. diese besagte Scheibe mittels der angesprochenen Massenelemente wie gewünscht positionieren zu können, können solche geeigneten Massenelemente beweglich auf im wesentlichen radial angeordneten Stangen sitzen und über einen Seilzug mit einer Verdreheinrichtung für die Scheibe gekoppelt sein. Durch die Zentrifugalkraft der Raddrehung worden diese Massenelemente nach außen bewegt und verdrehen über den besagten Seilzug oder dgl. diese Abdeck-Scheibe zur Schließung der Felge, d.h. zur Abdeckung der in der Felgenschüssel vorhandenen Durchbrüche.

Die Rückstellung der Scheibe in die die Durchbrüche zumindest im wesentlichen freilegende Ausgangs-Position kann über Federn erfolgen, die sowohl die Massenelemente als auch die Abdeckscheibe in die Ausgangsposition zurückdrehen.

Das oder die letztlich am erfindungsgemäßen Fahrzeugrad vorgesehene(n) Abdeckelement(e) kann/können aber auch anderweitig in die jeweils gewünschte Position gebracht werden, so bspw. durch Klappung um eine Achse. Die Klappachse kann dabei annähernd in Radialrichtung des Fahrzeugrades verlaufen, alternativ aber auch annähernd in Umfangsrichtung desselben. Neben ein Klappung kommt aber auch eine Verschiebung des Abdeckelementes in Frage, und zwar nicht nur - wie bereits erläutert wurde - quasi in Rad-Umfangsrichtung (wenn das Abdeckelement als verdrehbare Scheibe ausgebildet ist), sondern auch in Achsrichtung des Rades. In Richtung der Rad-Drehachse kann das geeignet gestaltete Abdeckelement, das dann bevorzugt mehreren Durchbrüchen zugeordnet ist, von diesen Durchbrüchen sozusagen abgehoben werden, wodurch es diese freilegt, oder auf diese aufgelegt werden, wodurch es diese verschließt. An dieser Stelle sei (nochmals) darauf hingewiesen, dass das Abdeckelement nicht zwangsläufig Bestandteil der Felge eines erfindungsgemäßen Fahrzeugrades sein muss. Vielmehr können die Abdeckelemente mit oder ohne zugehörigem Betätigungsmechanismus bzw. Aktuator (hierzu zählt auch ein weiter oben genanntes Kraftspeicherelement) auch auf einer Radkappe oder dgl. vorgesehen sein, d.h. sie sind Bestandteil eines Scheibenelementes, welches ähnlich den üblichen Radkappen auf die Felge aufsetzbar ist.

Ebenfalls darauf hingewiesen sei, dass es für die gewünschte Abdeckung des Durchbruchs oder der Durchbrüche in der Felge oder im Fahrzeugrad ausreichend ist, wenn diese Abdeckung oder dieses Verschließen der Durchbrüche aerodynamisch wirksam ist. Ein tatsächliches optisches Abdecken oder Verschließen ist dabei nicht erforderlich. So kann das Abdeckelement bspw. transparent, d.h. lichtdurchlässig sein. Das Abdeckelement kann aber auch (geringfügig) luftdurchlässig sein und hierzu bspw. in Form eines feinen Gitters oder Netzes ausgebildet sein, das bezüglich vorbeiströmender Luft unter aerodynamischer Betrachtungsweise zwar im wesentlichen wie eine Abdeckung wirkt, dabei jedoch gleichzeitig einen geringen Luftdurchtritt insbesondere zu Kühlzwecken erlaubt. Ferner können, insbesondere um in einer bestimmten Position des Abdeckelementes oder der Abdeckelemente einen dann gewünschten Luftübertritt zu den bzw. durch die Durchbrüche oder Zwischenräume zu gewährleisten, im Bereich zwischen dem Nabenabschnitt und dem Felgenbett am Abdeckelement und/oder am Fahrzeugrad oder der Felge geeignete Luftführungselemente vorgesehen sein, bspw. in Form von Luftleitschaufeln oder dgl..

Einige einfache, bevorzugte Ausführungsbeispiele der vorliegenden Erfindung sind in den beigefügten Prinzipskizzen vereinfacht dargestellt und werden im folgenden (ergänzend zu den obigen Ausführungen) näher erläutert. Dabei zeigt die
**Figurenfolge 1a - 1c** ein scheibenförmiges Abdeckelement, das gegenüber einer Felge oder einer Radkappe um die Rad-Drehachse verdrehbar ist,
**Figurenfolge 2a - 2c** in Durchbrüchen angeordnete Abdeckelemente, die um eine im wesentlichen in Umfangsrichtung verlaufende Achse klappbar sind,
**Figurenfolge 3a - 3e** ein in Richtung der Drehachse des Rades verschiebbares Abdeckelement in unterschiedlichen Positionen sowie Darstellungen,
**Figurenfolge 4a - 4c** in Durchbrüchen angeordnete Abdeckelemente, die um eine im wesentlichen in Radialrichtung des Rades verlaufende Achse klappbar sind.
In sämtlichen Figuren sind dabei gleiche Elemente mit den gleichen Bezugsziffern versehen.

Soweit überhaupt dargestellt (nämlich im wesentlichen nur in den **Figurenfolgen 2 und 3** und dabei jeweils stark vereinfacht bzw. speziell ausgeführt) ist mit der Bezugsziffer 1 ein Fahrzeugrad oder eine Felge eines Kraftfahrzeugs bzw. Personenkraftwagens (alternativ eines Zweirads) bezeichnet, das wie üblich zwischen seinem Nabenabschnitt 1a und dem Felgenbett 1b über dem Umfang verteilt angeordnete Tragelemente, wie Speichen oder Stege 1c aufweist, zwischen denen Durchbrüche 1d oder Zwischenräume 1d vorgesehen sind. Durch die Durchbrüche 1d hindurch kann bzw. soll dabei zumindest in gewissen Betriebszuständen Umgebungsluft strömen, um bspw. eine im Bereich der Innenseite des Fahrzeugrades angeordnete Bremse zu kühlen.

Bei den Ausführungsbeispielen nach den **Figurenfolgen 1 und 4** ist auf die äußere Stirnseite des Fahrzeugrades (wie üblich und bekannt) eine Radkappe 2 aufgesetzt, deren Zentrum ebenfalls als Nabenabschnitt 2a bezeichnet wird und in der im aufgesetzten Zustand mit den Durchbrüchen 1d in der Felge 1 korrespondierende, d.h. sich im wesentlichen deckende Durchbrüche 2d vorgesehen sind. Durch diese Durchbrüche 2d sowie daran anschließend durch die Durchbrüche 1d in der Felge 1 hindurch kann dann (analog oben) zu Kühlzwecken ein Luftstromstrom entlang einer an der Innenseite der Felge 1 angeordneten Bremse strömen.
Nachdem es nun in der vorliegenden Erfindung darum geht, dass die genannten Durchbrüche 1d bzw. 2d abgedeckt oder freigelegt werden, kann die in einigen der Ausführungsbeispiele dargestellte Radkappe 2 wie ein erfindungsgemäß gestaltetes Fahrzeugrad betrachtet werden, denn ob nun die Durchbrüche 1d in der Felge 1 selbst oder die Durchbrüche 2d in einer auf die Felge 1 aufgesetzten Radkappe 2 abgedeckt bzw. freigelegt werden, ist für das Wesen der vorliegenden Erfindung unerheblich. Insofern ist der Außenumfang 2b der Radkappe 2 dem Felgenbett 1b äquivalent und in gleicher Weise sind Stege 2c, die zwischen den Durchbrüchen 2d an/in der Radkappe 2 vorgesehen sind, äquivalent den Speichen 1c der Felge 1.

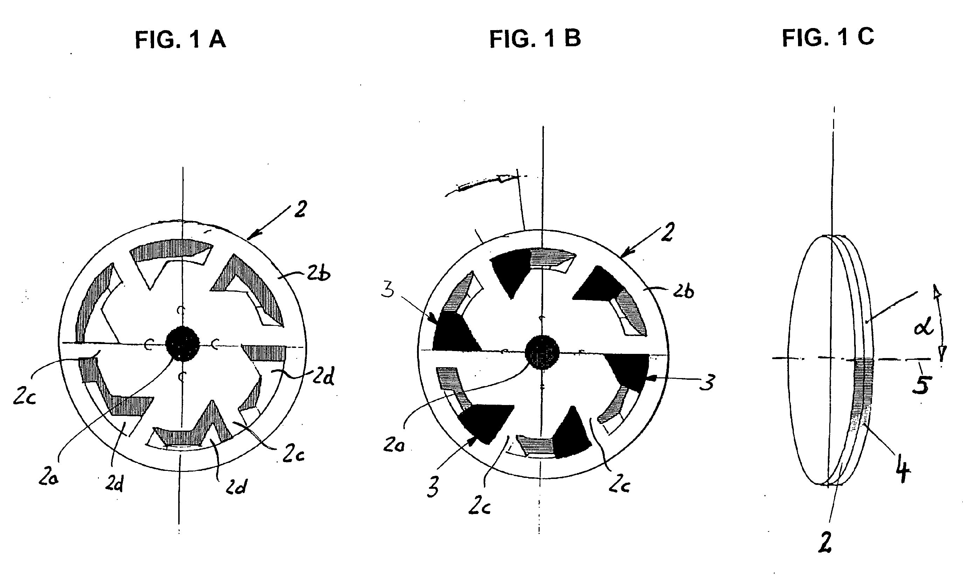

Zunächst auf die **Figurenfolge 1a - 1c** Bezug nehmend zeigt **Fig.1a** die Aufsicht auf ein erfindungsgemäßes Fahrzeugrad bzw. eine erfindungsgemäß gestaltete Radkappe 2, wobei die Durchbrüche 2d dieser Radkappe 2 offen, d.h. freigelegt sind. Durch die feine Schraffur in den Durchbrüchen 2d ist lediglich ein Schattenwurf dargestellt. Die gleiche Ansicht zeigt **Fig.1b,** jedoch ist nun jeder Durchbruch 2d zumindest teilweise mittels eines Abdeckelementes 3 abgedeckt, was durch einen dunkler dargestellten Bereich dargestellt ist. Dabei geht aus **Fig.1c** hervor, wie die einzelnen Abdeckelemente 3 vor die Durchbrüche 2d geschoben werden. Demnach ist hinter der Radkappe 2 eine weitere Scheibe 4 angeordnet, in der ebenfalls (in dieser Darstellung nicht sichtbare) Durchbrüche vorgesehen, die mit den Durchbrüchen 2d in der Radkappe 2 zur Deckung gebracht werden können. Wird jedoch diese Scheibe 4 gegenüber der Radkappe 2 um die Drehachse 5 des Fahrzeugrades 1 bspw. um den dargestellten Winkel α verdreht, so deckt die Scheibe 4 mit ihren zwischen deren Durchbrüchen liegenden Abschnitten die Durchbrüche 2d in der Radkappe 2 zumindest teilweise ab. Nicht dargestellt ist dabei ein Verstellmechanismus, der die Scheibe 4 gegenüber der Radkappe 2 in Abhängigkeit von gewissen Randbedingungen selbsttätig verdreht, jedoch kann dieser Mechanismus wie weiter oben ausführlich erläutert gestaltet sein.

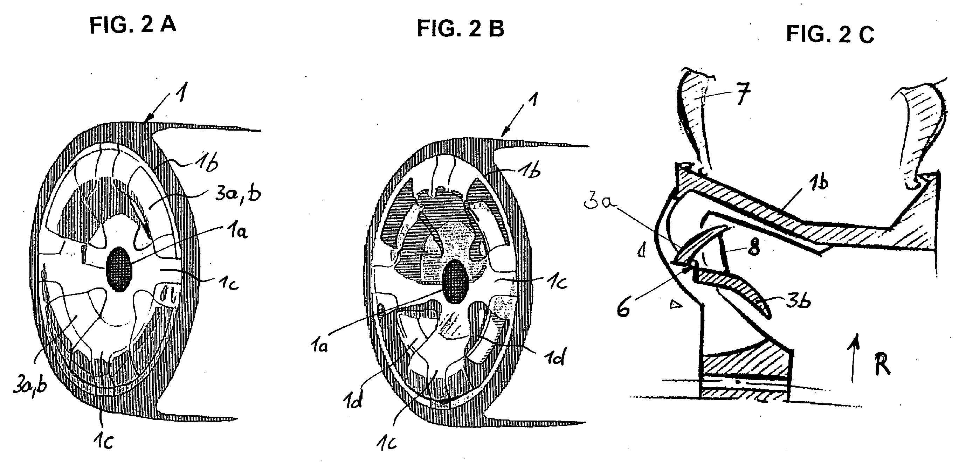

In der **Figurenfolge 2a - 2c** sind im Zustand nach **Fig.2a**, welche die Ansicht eines erfindungsgemäßes Fahrzeugrades 1 in abstrahiert räumlicher Ansicht zeigt, die Durchbrüche 1d der Felge 1 geschlossen, d.h. mittels Abdeckelementen 3a, 3b abgedeckt. Die gleiche Ansicht zeigt **Fig.2b,** jedoch ist nun jeder Durchbruch 1d zumindest teilweise freigelegt, indem jedes Abdeckelement 3a, 3b um eine im wesentlichen in Rad-Umfangsrichtung verlaufende Klapp-Achse 6 nach innen geklappt wurde. Besonders gut geht dies aus **Fig.2c** hervor, in der ein Teilschnitt durch dieses Fahrzeugrad 1 bzw. durch diese Felge 1 gezeigt ist, wobei auch das Felgenbett 1b mit dem darin liegenden Reifen 7 (teilweise) dargestellt sind. Wie ersichtlich verläuft eine sog. Klapp-Achse 6 im wesentlichen in Rad-Umfangsrichtung im wesentlichen in der Mitte jedes Durchbruches 1d liegend in diesem, wobei an der Klapp-Achse 6 ein in Radialrichtung R äußeres Abdeckelement 3a sowie ein in Radialrichtung R betrachtet inneres Abdeckelement 3b schwenkbar aufgehängt sind. Zwischen diesen beiden Abdeckelementen ist ein geeignetes Verstellelement 8 verspannt. Dieses Verstellelement 8 kann bspw. temperaturabhängig (oder aufgrund einer anderen Randbedingung) die beiden Abdeckelemente 3a, 3b zueinander hinziehen, wonach diese die in **Fig.2c** dargestellte Position einnehmen, in der jeder Durchbruch 1d zumindest teilweise freigelegt ist. Ändert sich diese Randbedingung signifikant, so kann dieses Verstellelement 8 die beiden Abdeckelemente 3a, 3b um die Klapp-Achse 6 auseinander, d.h. voneinander weg klappen, bis diese den zugehörigen Durchbruch 1d im wesentlichen abdecken. Selbstverständlich sind auch beliebige Zwischenpositionen zwischen diesen beiden erläuterten Extremstellungen möglich.

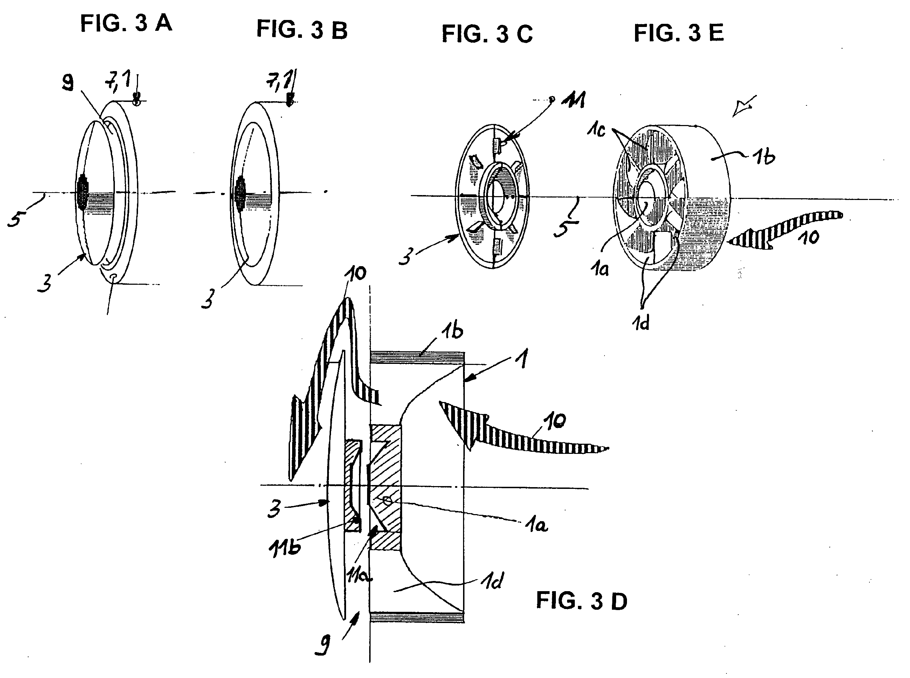

Im weiteren auf die **Figurenfolge 3a - 3e** Bezug nehmend zeigt **Fig.3a** die Ansicht eines erfindungsgemäßes Fahrzeugrades 1 in abstrahiert räumlicher Ansicht, wobei die Durchbrüche 1d in der Felge 1, die für sich ebenfalls auf das wesentliche vereinfacht in **Fig.3d** dargestellt ist, im wesentlichen freigelegt sind, während im Zustand nach **Fig.3b** ein Abdeckelement 3 diese Durchbrüche 1d abdeckt. Dieses Abdeckelement 3 ist dabei ähnlich einer scheibenförmigen Radkappe ausgebildet und kann den gesamten innerhalb des Reifens 7 liegenden Seitenwand-Bereich des Fahrzeugrades abdecken, wenn dieses Abdeckelement 3 bzw. diese scheibenförmige Radkappe 3 mit ihrem Außenumfang praktisch am Reifen 7 anliegt. Wie aus **Fig.3a** hervorgeht, kann dieses scheibenförmige Abdeckelement 3 jedoch in Richtung der Rad-Drehachse 5 nach außen verschoben werden, so dass ein Spalt 9 zwischen diesem Abdeckelement 3 und der Felge 1 entsteht, über den ein Weg für einen Luftstrom durch die Durchbrüche 1d in der Felge 1 hindurch geschaffen ist. Dies geht auch besonders gut aus **Fig.3e** hervor, in der ein Längsschnitt durch dieses Ausführungsbeispiel eines erfindungsgemäßen Fahrzeugrades mit abgehobenem Abdeckelement 3 und somit freigelegten Durchbrüchen 1d gezeigt ist, wobei der gewünschte Luftstrom durch Pfeile 10 dargestellt ist. Diese **Fig.3e** zeigt weiterhin eine zentrische Führung 11a im Nabenabschnitt 1a der Felge 1 für ein entsprechendes am Abdeckelement 3 vorgesehenes Gegenstück 11b, wobei in diese Führung 11a mit dem Gegenstück 11b auch ein nicht dargestellter Verstellmechanismus integriert sein kann, der das scheibenförmige Abdeckelement 3 gegenüber der Felge 1 in Abhängigkeit von gewissen Randbedingungen selbsttätig verschiebt, jedoch kann dieser Mechanismus wie weiter oben ausführlich erläutert gestaltet sein.

Aus der bereits erwähnten **Fig.3e** sowie der **Fig.3c,** die eine Innen-Ansicht des Abdeckelementes 3, d.h. die der Felge 1 zugewandte Seite des Abdeckelementes 3 zeigt, geht ein weiteres Detail dieses Ausführungsbeispieles hervor. Demnach sind geeignete Maßnahmen zur gezielten Führung oder Förderung eines gewünschten Luftstromes 10 (vgl. **Fig.3d**) vorgesehen. Hierzu sind an der Innen-Seite des scheibenförmigen Abdeckelementes 3 geeignete Luftführungselemente 11 in Form von Luftleitschaufeln oder dgl. vorgesehen. In vergleichbarer Weise sind die Speichen bzw. Stege 1c der Fege 1 selbst als sog. Luftstrom-Förderelemente ausgebildet, d.h. die Speichen oder Stege 1c sind derart geformt, dass sie ähnlich einem Axialgebläse bei Rotation der Felge 1 von innen her Luft ansaugen und einen entsprechenden Luftstrom 10 dann durch den besagten Spalt 9 fördern, wodurch eine (nicht dargestellte) im Innenseiten-Bereich der Felge 1 angeordnete Fzg.-Bremse wirkungsvoll gekühlt werden kann.

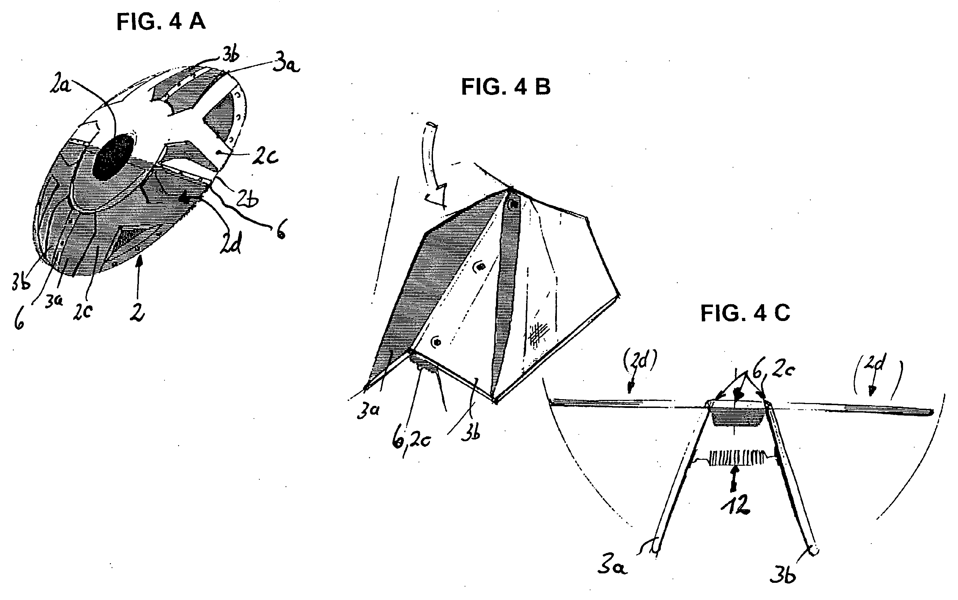

Beim Ausführungsbeispiel nach der **Figurenfolge 4a - 4c** sind jedem Durchbruch 2d in einer Radkappe 2 zwei Abdeckelemente 3a, 3b zugeordnet, die um eine im wesentlichen in Radialrichtung verlaufende Klapp-Achse 6 wie hier dargestellt nach innen (alternativ jedoch auch nach außen) verschwenkbar sind. Die Klappachse 6 wird dabei durch eine sog. Tragschiene gebildet, bei der es sich ebenfalls um eine Speiche oder einen Steg 2c handeln kann. Wie aus **Fig.4c,** die einen Schnitt durch einen Durchbruch 2d mit zugehörigen Abdeckelementen 3a, 3b im wesentlichen in Umfangsrichtung zeigt, hervorgeht, ist zwischen den beiden einem Durchbruch 2d zugeordneten Abdeckelementen 3a, 3b ein Druckfederelement 12 vorgesehen, welches die Abdeckelemente 3a, 3b in ihre den Durchbruch 2d im wesentlichen abdeckende Position verschiebt. Bei Erwärmung biegen sich jedoch diese aus einem geeigneten Thermoplast bestehenden Abdeckelemente 3a, 3b gegen die Kraft dieses Druckfederelementes 12 nach innen und legen damit den entsprechenden Durchbruch 2d frei.
Daneben sind eine Vielzahl von weiteren Abwandlungen oder Ausgestaltungen eines erfindungsgemäßen Fahrzeugrades (bspw. entsprechend der ausführlichen Beschreibung vor der Figurenbeschreibung) möglich, ohne den Inhalt der Patentansprüche zu verlassen. Stets ist es jedoch möglich, die in einem Fahrzeugrad oder einer Felge vorgesehenen Durchbrüche während einer Fahrzeugfahrt zu verschließen oder zu öffnen, sei es um die aerodynamischen Verhältnisse zu verbessern oder zu Kühlzwecken und/oder aus Stylinggründen.

## Patentansprüche

1. Fahrzeugrad oder Felge mit einem Nabenabschnitt (1a, 2a), einem Felgenbett (1b, 2b) zur Aufnahme eines Reifens (7) oder zur Ausbildung einer Lauffläche, sowie mit mehreren zwischen dem Nabenabschnitt (1a, 1b) und dem Felgenbett (2a, 2b) über dem Umfang verteilt angeordneten Tragelementen wie Speichen oder Stegen (1c, 2c), zwischen denen Durchbrüche (1d, 2d) oder Zwischenräume vorgesehen sind,
**dadurch gekennzeichnet, dass** zumindest einer der Durchbrüche (1d, 2d) oder Zwischenräume zumindest teilweise abdeckbar oder verschließbar ist, während sich das mit diesem Fahrzeugrad oder dieser Felge (1) ausgerüstete Fahrzeug bewegt, oder dass zumindest einer der zunächst zumindest teilweise abgedeckten oder verschlossenen Durchbrüche (1d, 2d) oder Zwischenräume zumindest teilweise freilegbar ist, während sich das mit diesem Fahrzeugrad oder dieser Felge (1) ausgerüstete Fahrzeug bewegt.

2. Fahrzeugrad oder Felge nach Anspruch 1,
**dadurch gekennzeichnet, dass** ein Abdeckelement (3, 3a, 3b) des Durchbruchs (1d, 2d) oder der Durchbrüche mittels eines Aktuators gezielt in eine jeweils gewünschte Position bewegbar ist.

3. Fahrzeugrad oder Felge nach Anspruch 2,
**dadurch gekennzeichnet, dass** der Aktuator die zum Freilegen des Durchbruchs (1d, 2d) oder der Durchbrüche erforderliche Energie aus der Rotationsenergie des Rades oder aus dem bei der Fahrt des Fahrzeugs auftretenden Fahrtwind bezieht oder durch eine Temperaturänderung aktiviert wird.

4. Fahrzeugrad oder Felge nach einem der vorangegangenen Ansprüche,
**dadurch gekennzeichnet, dass** das oder die Abdeckelement(e) (3, 3a, 3b) unter Einwirkung eines Kraftspeicherelementes in eine Ruheposition bewegt oder gehalten wird bzw. werden.

5. Fahrzeugrad oder Felge nach einem der vorangegangenen Ansprüche,
**dadurch gekennzeichnet, dass** das zunächst den Durchbruch (1d, 2d) oder die Durchbrüche zumindest teilweise abdeckende Abdeckelement (3, 3a, 3b) bei Überschreiten einer gewissen Temperatur im Radbereich selbsttätig in die den Durchbruch oder die Durchbrüche zumindest teilweise freilegende Position bewegt wird.

6. Fahrzeugrad oder Felge nach Anspruch 5,
**dadurch gekennzeichnet, dass** der Aktuator zur gewünschten Bewegung des Abdeckelementes (3, 3a, 3b) auf Basis einer Memory-Legierung oder dgl. arbeitet.

7. Fahrzeugrad oder Felge nach Anspruch 1,
**dadurch gekennzeichnet, dass** der Durchbruch (1d, 2d) oder Zwischenraum oder die Durchbrüche oder Zwischenräume selbsttätig oberhalb einer gewissen Fahrgeschwindigkeit des Fahrzeugs oder Drehzahl des Rades zumindest teilweise abgedeckt oder verschlossen und unterhalb dieser Fahrgeschwindigkeit oder Drehzahl wieder selbsttätig freigelegt bzw. geöffnet wird oder werden.

8. Fahrzeugrad oder Felge nach Anspruch 7,
**dadurch gekennzeichnet, dass** die zum Abdecken oder Verschließen der Durchbrüche (1d, 2d) oder Zwischenräume benötigte Kraft aus der aus der Drehbewegung des Rades resultierenden Zentrifugalkraft abgeleitet wird.

9. Fahrzeugrad oder Felge nach Anspruch 8,
**dadurch gekennzeichnet, dass** zumindest ein Massenelement geeignet geführt unter Zentrifugalkrafteinfluss in Radialrichtung nach außen bewegbar ist, das hierbei zumindest ein Abdeckelement in eine zumindest einen Durchbruch oder Zwischenraum abdeckende oder verschließende Position überführt.

10. Fahrzeugrad oder Felge nach einem der Ansprüche 7 - 9,
**dadurch gekennzeichnet, dass** das Massenelement und/oder das Abdeckelement unter Einwirkung eines Kraftspeicherelementes (insbesondere gegen Zentrifugalkrafteinfluss) in die zumindest bei Radstillstand gewünschte sog. Ruheposition bewegt oder gehalten wird bzw. werden.

11. Fahrzeugrad oder Felge nach einem der Ansprüche 7 - 10,
**dadurch gekennzeichnet, dass** zur geeigneten Verbindung zwischen dem oder den Massenelement(en) und/oder dem oder den Kraftspeicherelement(en) und/oder dem oder den Abdeckelement(en) ein oder mehrere insbesondere flexible(s) Zugmittel vorgesehen ist bzw. sind

12. Fahrzeugrad oder Felge nach einem der Ansprüche 7 - 11,
**dadurch gekennzeichnet, dass** das Kraftspeicherelement in Form eines flexiblen Stabes ausgebildet ist, der einerseits im Nabenabschnitt befestigt und dessen anderes Ende unter Zentrifugalkrafteinfluss zum Felgenbett hin bewegbar ist.

13. Fahrzeugrad oder Felge nach einem der vorangegangenen Ansprüche,
**dadurch gekennzeichnet, dass** das Abdeckelement (3, 3a, 3b) in Form einer um die Rad-Drehachse (5) verdrehbaren Scheibe ausgebildet ist.

14. Fahrzeugrad oder Felge nach einem der Ansprüche 1 - 12,
**dadurch gekennzeichnet, dass** das Abdeckelement in Form mehrerer bspw. sichelförmiger und um einen gemeinsamen felgenfesten Punkt verschwenkbarer Lamellen ausgebildet ist.

15. Fahrzeugrad oder Felge nach einem der Ansprüche 1 - 12,
**dadurch gekennzeichnet, dass** das Abdeckelement (3, 3a, 3b) um eine Achse (6) klappbar ist.

16. Fahrzeugrad oder Felge nach einem der Ansprüche 1 - 12,
**dadurch gekennzeichnet, dass** das Abdeckelement (3, 3a, 3b) in Richtung der Drehachse (5) des Rades verschiebbar ist.

17. Fahrzeugrad oder Felge nach einem der vorangegangenen Ansprüche,
**dadurch gekennzeichnet, dass** im Bereich zwischen dem Nabenabschnitt (1a) und dem Felgenbett (1b) am Abdeckelement (3) und/oder am Fahrzeugrad oder der Felge (1) geeignete Luftführungselemente (11) vorgesehen sind.

18. Fahrzeugrad oder Felge nach einem der vorangegangenen Ansprüche,
**dadurch gekennzeichnet, dass** das Abdeckelement den Durchbruch aerodynamisch betrachtet im wesentlichen verschließen kann, dabei jedoch durchaus luftdurchlässig oder lichtdurchlässig ausgebildet ist.

19. Fahrzeugrad oder Felge nach einem der vorangegangenen Ansprüche,
**dadurch gekennzeichnet, dass** das Abdeckelement (3, 3a, 3b) Bestandteil einer auf die Felge aufsetzbaren Radkappe (2) ist.
